# EUROPEAN PATENT APPLICATION

(11) **EP 4 691 727 A1**
(43) Date of publication of application: **11.02.2026**
(21) Application number: 24779351.6
(22) Date of filing: 11.03.2024
(51) Int. Cl.: B29C 45/00

(54) **METHOD FOR PRODUCING RESIN MOLDED ARTICLE**

(30) Priority: 31.03.2023 JP 2023057148
(71) Applicant: TOYOTA BOSHOKU KABUSHIKI KAISHA, Kariya-shi, Aichi 448-8651 (JP)
(72) Inventor: KIMURA, Ryusuke, Kariya-shi, Aichi 448-8651 (JP)
(74) Representative: TBK
(86) International application number: PCT/JP2024/009314
(87) International publication number: WO 2024/203221

(57) **Abstract**

A method for producing a resin molded article includes a mixing step of mixing a base resin and fiber waste to form a mixture where the base resin is a thermoplastic resin and the fiber waste is a recycled material of thermoplastic resin having a higher fluidity than the base resin in a molten state, a heating step of heating and melting the mixture, and a molding step of molding the resin molded article by injecting the mixture that is molten into a mold.

## Description

### TECHNICAL FIELD

The present disclosure discloses a method for producing a resin molded article.

### BACKGROUND ART

Patent Literature 1 discloses a filter element used in an air conditioner of an automobile. The filter element has the form of a rectangular parallelepiped and is panel-shaped. Further, the filter element includes a filter portion that removes foreign matter from air.

The filtering material forming the filter portion is a nonwoven fabric produced through a melt blown process. The filter portion is formed by cutting nonwoven fabric into a predetermined length and width and then pleating the cut nonwoven fabric.

### CITATION LIST

### Patent Literature

Patent Literature 1: JP2014-213242A

### SUMMARY OF INVENTION

### Technical Problem

When producing the filter element, the cutting of the nonwoven fabric generates fiber waste. Such fiber waste is usually difficult to recycle. Thus, fiber waste is disposed of and incinerated.

However, in recent years, in terms of reducing carbon dioxide emissions, there is a growing demand to reduce the amount of fiber waste.

This demand for recycling is not limited to the fiber waste generated when producing filter elements but also applies to fiber waste generated when producing other fiber products made of thermoplastic resin.

### Solution to Problem

In one general aspect, a method for producing a resin molded article includes a mixing step of mixing a base resin and fiber waste to form a mixture where the base resin is a thermoplastic resin and fiber waste is a recycled material of thermoplastic resin having a higher fluidity than the base resin in a molten state, a heating step of heating and melting the mixture, and a molding step of molding the resin molded article by injecting the mixture that is molten into a mold.

### BRIEF DESCRIPTION OF DRAWINGS

Fig. 1 is a flowchart illustrating the procedures for producing a resin molded article in accordance with an embodiment.
Fig. 2 is an exploded perspective view of a filter portion and fiber waste in accordance with the embodiment.
Fig. 3A is a cross-sectional view of a first fiber in accordance with the embodiment, and Fig. 3B is a cross-sectional view of a second fiber in accordance with the embodiment.
Fig. 4 is a cross-sectional view illustrating mixing step in accordance with the embodiment.
Fig. 5 is a cross-sectional view of an injection device in accordance with the embodiment.

### DESCRIPTION OF EMBODIMENTS

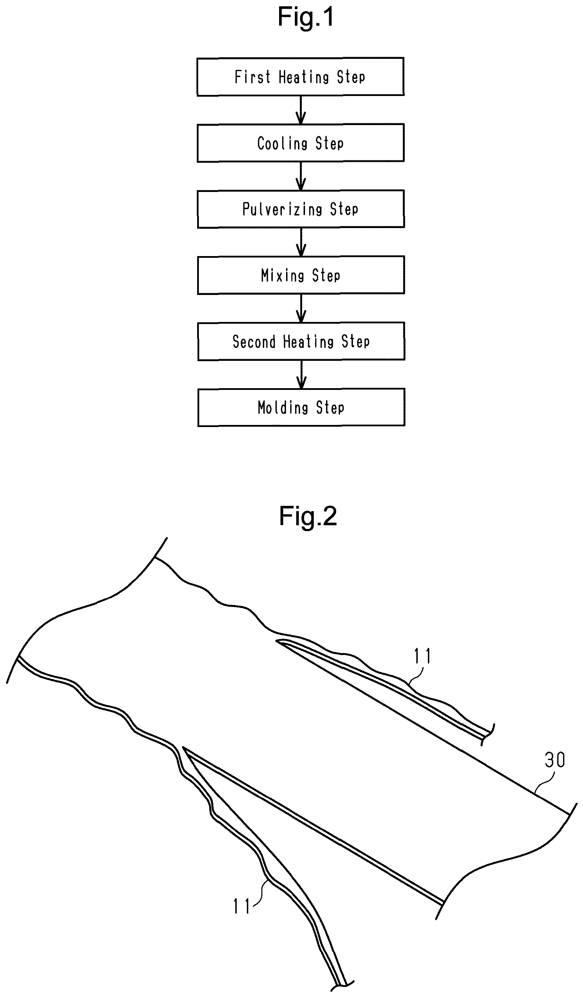

An embodiment of a method for producing a resin molded article will now be described with reference to Figs. 1 to 5.

The method produces the resin molded article that uses a base resin 10, formed from a newly-used thermoplastic resin, and fiber waste 11, which is a recycled material of thermoplastic resin and has a higher fluidity than the base resin 10 in a molten state.

Further, as shown in Fig. 1, the method for producing the resin molded article includes a first heating step, a cooling step, a pulverizing step, a mixing step, a second heating step, and a molding step.

The base resin 10 and the fiber waste 11 will now be described.

The base resin 10 is a thermoplastic resin. The base resin 10 is, for example, polypropylene. The melting temperature of polypropylene is approximately 200⁰C.

As shown in Fig. 2, the fiber waste 11 is generated when producing a filter element used for an air conditioner of an automobile.

More specifically, the fiber waste 11 is generated when cutting out a rectangular sheet from a nonwoven fabric as a filter portion 30 of a filter element.

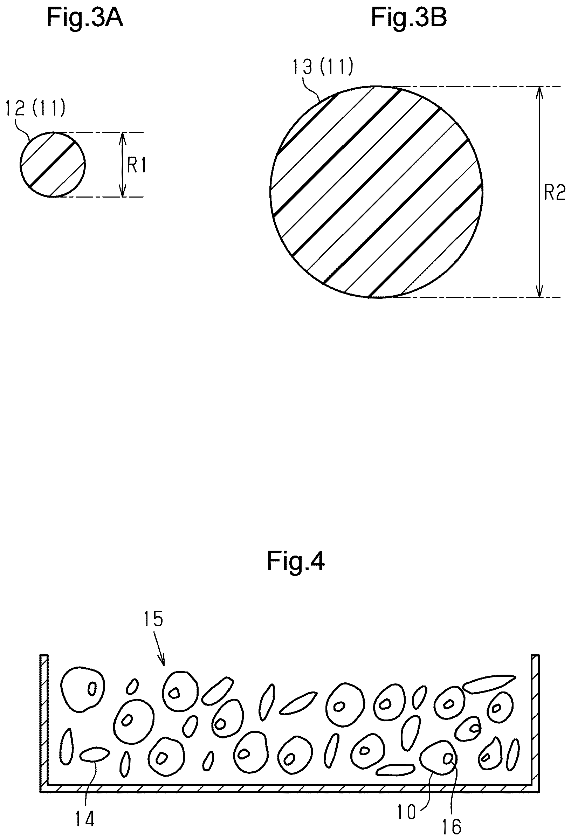

As shown in Figs. 3A and 3B, the fiber waste 11 includes a first fiber 12 and a second fiber 13 that has a larger fiber diameter than the first fiber 12. A fiber diameter R1 of the first fiber 12 is, for example, between 1 µm and 15 µm, inclusive. A fiber diameter R2 of the second fiber 13 is, for example, between 85 µm and 95 µm, inclusive.

The first fibers 12 and the second fibers 13 are made from the same type of thermoplastic resin as the base resin 10. In the present embodiment, the first fibers 12 and the second fibers 13 are made from polypropylene. Further, the first fibers 12 and the second fibers 13 spin through a melt blown process.

The degrees of polymerization of polypropylene molecules increase in the order of the first fibers 12, the second fibers 13, and the base resin 10. Thus, melt flow rate (MFR), which is a fluidity index, decreases in the order of the first fibers 12, the second fibers 13, and the base resin 10. The MFR of the first fibers 12, the second fibers 13, and the base resin 10 are, for example, approximately 1200 g/10 min, 125 g/10 min, and 21 g/10 min, respectively.

Furthermore, in the fiber waste 11, the basis weight of the second fiber 13 is greater than the basis weight of the first fiber 12. The basis weight of first fiber 12 and the second fiber 13 are, for example, approximately 12 g/m² and 90 g/m².

Each step of the method for producing the molded resin article will now be described in detail.

### First Heating Step

In the first heating step, a pulverizing heating device (not shown) pulverizes and then heats and melts the fiber waste 11. Afterwards, the pulverizing heating device extrudes the molded resin onto an external tray.

### Cooling Step

In the cooling step, the extruded resin (hereafter referred to as the recycled resin 14) on the tray is cooled and solidified.

### Pulverizing Step

In the pulverizing step, the recycled resin 14 is pulverized by a pulverizer (not shown).

### Mixing Step

As shown in Fig. 4, in the mixing step, the granular base resin 10 and the pulverized recycled resin 14 are mixed to form a mixture 15. Talc 16 is mixed with the base resin 10 in advance as a filler. The MFR of the mixture 15 is less than the MFR of the first fiber 12 and the MFR of the second fiber 13 and greater than the MFR of the base resin 10. The MFR of the mixture 15 is, for example, 35 g/10 min.

### Second Heating Step

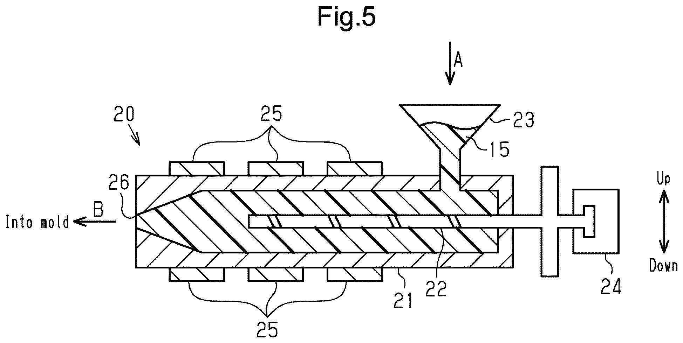

As shown in Fig. 5, in the second heating step, the mixture 15 is fed to an injection device 20 and is heated.

The injection device 20 heats the mixture 15 and injects the heated mixture 15 into a mold (not shown). The injection device 20 includes a cylinder 21, a screw 22, a hopper 23, a driver 24, and heaters 25.

The cylinder 21 extends in the horizontal direction. An injection port 26 is arranged at a distal end (left end in Fig. 5) in an extending direction of the cylinder 21.

The screw 22 is accommodated in the cylinder 21 in a rotatable manner.

The hopper 23 is arranged above the cylinder 21 in communication with the cylinder 21.

A basal end of the screw 22 is connected to an output shaft of a motor of the driver 24.

The heaters 25 are arranged at the distal side (left side in Fig. 5) from the part where the hopper 23 is arranged on the outer circumference of the cylinder 21.

As shown by arrow A in Fig. 5, the mixture 15 fed into the hopper 23 falls into the cylinder 21. In the cylinder 21, the screw 22 rotates to transfer the mixture 15 toward the injection port 26. Further, the mixture 15 is heated to a temperature that is greater than or equal to the melting temperature of the base resin 10 and the recycled resin 14. This melts the base resin 10 and the recycled resin 14.

### Molding Step

As shown by arrow B in Fig. 5, in the molding step, the mixture 15 is injected from the injection port 26 of the injection device 20 into the mold in a molten state. Then, the mixture 15 and the mold is cooled to form a resin molded article.

The second heating step of the present embodiment corresponds to the heating step described in the "Solution to Problem."

Advantages of the present embodiment will now be described.
(1) In the mixing step, the base resin 10, which is a thermoplastic resin, is mixed with the fiber waste 11, which is a recycled material of thermoplastic resin having a higher fluidity than the base resin 10 in a molten state, into a mixture 15. Further, the resin molded article is formed by injecting the mixture 15 that is heated and melted into a mold.

The method mixes the fiber waste 11, which has a greater fluidity than the base resin 10, with the base resin 10. This increases the fluidity of the mixture 15 in a molten state. This facilitates molding of the resin molded article. Further, the use of the fiber waste 11 when producing the resin molded article reduces the amount of the fiber waste 11 that is disposed of. In this manner, the amount of the fiber waste 11 that is disposed of is decreased while facilitating molding of the resin molded article.

(2) The recycled resin 14 is pulverized prior to the mixing step.

The method mixes the recycled resin 14 with the base resin 10, which is in a pulverized state. This facilitates mixing of the recycled resin 14 with the base resin 10. Thus, biased distribution of the recycled resin 14 is limited in the mixture 15. This avoids a situation in which the mixture 15 includes portions having high fluidity and portions having low fluidity. Thus, molding is further facilitated.

(3) The fiber waste 11 includes the first fibers 12 and the second fibers 13 that have greater fiber diameters than the first fibers 12.

When spinning a fiber of a thermoplastic resin, as the fiber diameter of the fiber decreases, the passage in a spinneret through which melted resin passes becomes narrower. Thus, in general, as the fiber diameter of the fiber decreases, the fluidity of the fiber becomes higher.

In the method, the fiber waste 11 includes the first fibers 12 and the second fibers 13, which have different fiber diameters. Thus, the fluidity of the mixture 15 may be increased compared to, for example, when the fiber waste 11 is formed from only the second fibers 13.

However, if the fiber waste 11 is formed from only the first fibers 12, the fluidity of the mixture 15 may become excessively high. In order to avoid this problem, the amount of the fiber waste 11 mixed in the base resin 10 will need to be limited. This leaves room for improvement in recycling efficiency of the fiber waste 11.

In this regard, in the method, the fiber waste 11 includes the first fibers 12 and the second fibers 13, which have different fiber diameters. This avoids a situation in which the fluidity of the mixture 15 becomes excessively high, while increasing the amount of the fiber waste 11 mixed into the base resin 10. By increasing the amount of the fiber waste 11 in the mixture 15, the amount of the base resin 10 in the mixture 15 may be reduced.

Accordingly, the amount of the fiber waste 11 that is disposed of is further reduced, while further facilitating molding of the molded resin article.

(4) The second fiber 13 has a greater basis weight than the first fiber 12.

The method avoids a situation in which the fluidity of the mixture 15 is excessively high due to the large amount of the first fiber 12, which has a smaller fiber diameter than the second fiber 13, included in the mixture 15. This limits molding defects in the resin molded article. Further, compared to when the basis weight of the second fiber 13 is less than or equal to the basis weight of the first fiber 12, the amount of the fiber waste 11 mixed in the base resin 10 may be increased without the fluidity of the mixture 15 becoming excessively high.

Accordingly, the amount of the fiber waste 11 disposed of is further decreased, and the molding of the molded resin article is further facilitated.

(5) The first fibers 12, the second fibers 13, and the base resin 10 are formed from the same type of the thermoplastic resin, in which the degrees of polymerization of molecules of the thermoplastic resin increase in the order of the first fibers 12, the second fibers 13, and the base resin 10.

The method allows the first fibers 12, the second fibers 13, and the base resin 10 to be readily mixed in the melted mixture 15. This further facilitates molding of the resin molded article.

### Modifications

The above embodiments may be modified as described below. The above embodiments and the following modifications may be combined as long as the combined modifications remain technically consistent with each other.

The talc 16 does not need to be mixed in the base resin 10 in advance. During the mixing step, pulverized recycled resin 14, the base resin 10, and the talc 16 may be mixed simultaneously.

The resin molded article does not need to include the talc 16.

The first fibers 12, the second fibers 13, and the base resin 10 do not need to be formed from the same type of thermoplastic resin. The molten state of the fiber waste 11 may have a higher fluidity than the base resin 10. For example, the base resin 10 may be polycarbonate, and the fiber waste 11 may be polyethylene terephthalate or other types of thermoplastic resin.

The basis weight of the second fiber 13 of the fiber waste 11 may be less than or equal to the basis weight of the first fiber 12 of the fiber waste 11.

The fiber waste 11 may include only fibers having the same fiber diameter.

The fiber waste 11 pulverized in the first heating step may be left pulverized when mixed in the base resin 10.

In the first heating step, the fiber waste 11 may be heated and melted without being pulverized.

The first heating step, the cooling step, and the pulverizing step may be omitted, and the fiber waste 11 may be mixed with the base resin 10 without being pulverized.

The base resin 10 does not have to be new and may be recycled material.

## Claims

1. A method for producing a resin molded article, the method comprising:
a mixing step of mixing a base resin and fiber waste to form a mixture, wherein the base resin is a thermoplastic resin, and the fiber waste is a recycled material of thermoplastic resin having a higher fluidity than the base resin in a molten state;
a heating step of heating and melting the mixture; and
a molding step of molding the resin molded article by injecting the mixture that is molten into a mold.

2. The method according to claim 1, further comprising:
a pulverizing step of pulverizing the fiber waste prior to the mixing step;
wherein in the mixing step, the fiber waste in the pulverized state is mixed with the base resin.

3. The method according to claim 1 or 2, wherein the fiber waste includes fibers having different fiber diameters.

4. The method according to claim 3, wherein
the fiber waste includes a first fiber and a second fiber that has a greater fiber diameter than the first fiber, and
the second fiber has a greater basis weight than the first fiber.

5. The method according to claim 4, wherein the first fiber, the second fiber, and the base resin are formed from the same type of the thermoplastic resin, in which a degree of polymerization of molecules of the thermoplastic resin increases in order of the first fiber, the second fiber, and the base resin.
